# EUROPÄISCHE PATENTSCHRIFT

(11) **EP 2 110 734 B1**
(45) Veröffentlichungstag und Bekanntmachung des Hinweises auf die Patenterteilung: **26.01.2011**
(21) Anmeldenummer: 08007457.8
(22) Anmeldetag: 16.04.2008
(51) Int. Cl.: G06F 1/18

(54) **Tragrahmen zur Aufnahme eines Bedienfeldes**
Support frame for holding an operating panel
Cadre porteur destiné à la réception d'un panneau de commande

(43) Veröffentlichungstag der Anmeldung: 21.10.2009
(73) Patentinhaber: SIEMENS AKTIENGESELLSCHAFT, 80333 München (DE)
(72) Erfinder: Hösl, Richard, 92507 Nabburg (DE); Zettwitz, Rolf, 91301 Forchheim (DE)

(56) Entgegenhaltungen:
- EP-A- 1 630 643
- US-A- 5 825 617
- US-A1- 2007 225 690

## Beschreibung

Die Erfindung betrifft einen Tragrahmen zur Aufnahme eines Bedienfeldes, umfassend den Tragrahmen bildende Rahmenelemente, welche als äußere einen Gehäuseteil bildende Seitenflächen ausgestaltet sind, und Befestigungsmittel zur Befestigung des Bedienfeldes im Wesentlichen innerhalb des Tragrahmens. Des Weiteren betrifft die Erfindung eine Bedien- und Beobachtungsvorrichtung mit einem Tragrahmen zur Aufnahme eines Bedienfeldes, umfassend den Tragrahmen bildende Rahmenelemente, welche als äußere einen Gehäuseteil bildenden Seitenflächen ausgestaltet sind, und Befestigungsmittel zur Befestigung des Bedienfeldes im Wesentlichen innerhalb des Tragrahmens.

Für den Einbau von Bedienfeldern, Bedienoberflächen, Touch-Panels, oder Panel-PC's werden in der Regel Gehäuse verwendet. Sollen derartige Bedien- und Beobachtungsvorrichtungen als sogenannte Stand-Alone Bedienplätze auf einem Tragarm montiert werden, so werden nach dem Stand der Technik die Bedienoberflächen oder die Panel-PC's in einen Einbaukasten eingebaut. Dieser Einbaukasten ist wiederum beispielsweise entweder mit seiner Bodenplatte oder mit seiner Rückwand mit einem Tragarm verbunden. Solch ein Tragarm ermöglicht es, dem Anwender einer industriellen Maschine seine Bedienoberfläche einfach zu bedienen und gegebenenfalls in eine für ihn vorteilhafte Position zu schwenken. Nachteilig an dem Einbau der Bedienoberfläche in einen Einbaukasten ist, dass zum Einen ein Gesamtgewicht einer solchen Kasten-Konstruktion relativ hoch ist und zum Anderen eine durch einen beispielsweise Panel-PC entstehende Abwärme aus dem Einbaukasten nicht ausreichend abgeführt werden kann. Für eine Abführung der Abwärme sind aufwendige Entwärmungsvorrichtungen wie z.B. Lüfter und Lüftungskanäle erforderlich.

In EP 1 630 643 A2 ist ein Doppelwandgehäuse für Industrie-Panels und Panel-PC's offenbart. Es wird ein Gehäuse zur Aufnahme eines Bedienfeldes und/oder eines Rechners mit einer Bedienoberfläche vorgestellt. Derartige Gehäuse bzw. Gehäuserahmen dienen dazu eine aufgenommene Bedienoberfläche, beispielsweise ein Touch Screen, in eine Schaltschranktür, eine Wand, ein Pult oder in den zuvor genannten Einbaukasten für den Stand-Alone Betrieb einzubauen. Nachteilig an diesem Doppelwandgehäuse für Industrie-Panels und Panel-PC's ist es, dass diese Art von Doppelwandgehäusen bzw. Rahmen nicht ohne einen Einbaukasten zusammen mit einem Tragarm oder Tragarmsystem kombiniert werden können.

In US 2007/225690 A1 wird ein medizinisches System offenbart, welches einen Panel-PC an einem Tragarm aufweist. Der Panel-PC weist auf seiner Rückseite ein Tragelement auf, an welchem ein Tragarm befestigt ist.

Die Aufgabe der vorliegenden Erfindung besteht darin, ein Gehäuse für ein Bedienfeld, bzw. ein Display oder einen Panel-PC anzugeben, welches ohne Verwendung eines Einbaukastens mit einem Tragarm bzw. Tragarmsystem kombiniert werden kann.

Die Aufgabe wird gelöst durch ein Gehäuse mit einem eingangs genannten Tragrahmen, wobei ein Teil zumindest eines ersten Rahmenelementes mit einer ersten Flanschfläche zum Anflanschen des ersten Rahmenelementes an einen Tragarm mit einer zweiten Flanschlfäche ausgestaltet ist. Mit der Ausgestaltung eines Rahmenelementes, beispielsweise einen als Frästeil ausgestalteten Aluminiumrahmens, mit einer ersten Flanschstelle, wird eine Aufhängung bzw. eine Adaptionsstelle für ein Gehäuse mit einem Tragarm bzw. einem Tragarmsystem geschaffen, ohne dass das Bedienfeld eines Panel-PC's mit einem Einbaurahmen nach dem Stand der Technik in ein Einbaugehäuse integriert werden muss. Vorteilhaft hieran ist, dass eine durch einen Einbaukasten hervorgerufene verstärkte Wärmeentwicklung und ein daraus resultierender Wärmestau nicht mehr auftritt. Hierdurch können vorzugsweise Panel-PC's in einem harten, rauen und hoch temperierten Industrieumfeld mit einer erhöhten Lebensdauer eingesetzt werden.

In einer vorteilhaften Ausgestaltung der Erfindung ist die erste Flanschfläche im Wesentlichen senkrecht zu einer durch das Bedienfeld gegebenen Bedienfläche angeordnet. Die Flanschfläche ist dabei vorzugsweise integrativer Bestandteil des Tragrahmens, welcher beispielsweise aus einer Aludruckgußrahmenplatte oder aus Magnesium oder aus einzelnen Profilen gefertigt ist. Durch die senkrechte Anordnung der Flanschfläche zur Bedienfläche kann das später in den Tragrahmen eingebaute Bedienfeld senkrecht auf die zweite Flanschfläche des Tragarms montiert werden und ist somit leicht zugänglich und einfach zu bedienen.

In einer weiteren vorteilhaften Ausgestaltung weist die Flanschfläche eine Aussparung zum Durchführen von Leitungen auf. Durch diese Aussparung können Versorgungsleitungen wie eine Stromversorgungsleitung, eine Datenleitung und beispielsweise eine gesonderte Not-Aus-Leitung geführt werden und mit den für das Bedienfeld bzw. für einen Panel-PC notwendigen Elektronik-Modulen verbunden werden. Die Leitungen können also vom Inneren eines Panel-PC's durch die Aussparung der Flanschöffnung in ein Rohr des Tragarmes geführt werden.

Bei einer besonders vorteilhaften Ausgestaltung der Erfindung wird zwischen der ersten Flanschfläche und der zweiten Flanschfläche ein Verbindungsmittel angeordnet. Dieses Verbindungsmittel kann u.a. als ein Adapter für unterschiedliche Tragarmsysteme von unterschiedlichen Herstellern genutzt werden. Damit ist ein Grundgerät mit der Zuhilfenahme von Adaptern an die unterschiedlichsten Tragarmsysteme montierbar. Eine Kombination mit einem neigungsverstellbaren Gelenk zwischen dem Verbindungsmittel und dem Tragarm ist ebenso denkbar.

Vorzugsweise ist das Verbindungsmittel mit einem Haltearm zur Aufnahme eines Zusatzgerätes, welches zu einer Seitenfläche angeordnet ist, ausgestaltet. Durch beispielsweise zwei Haltearme, welche sich rechts und links von dem Verbindungsmittel längs zu einer der Seitenflächen erstrecken, können mit Vorteil Zusatzgeräte, wie z.B. Tastenmodule, Lautsprecher, haptische Eingabegeräte oder akustische Signalgeber seitlich von dem Bedienfeld montiert werden. Das Bedienfeld mit seinem Tragrahmen stellt somit ein Grundgerät dar, welches über die an dem Verbindungsmittel angeordneten Haltearme durch Zusatzgeräte beliebig erweiterbar ist. Ein weiterer Haltearm könnte beispielsweise eine Tastatur aufnehmen, welche unterhalb des Bedienfeldes angeordnet ist. Mittels der an dem Verbindungselement angeordneten Haltearme entsteht ein modulares Baukastensystem.

In einer weiteren vorteilhaften Ausgestaltung, welches die Flexibilität eines solchen Baukastensystems erhöht, weist ein drittes Rahmenelement eine dritte Flanschfläche auf. Für das erwähnte Grundgerät oder ein Baukastensystem wird mit der dritten Flanschfläche die Möglichkeit geschaffen, beispielsweise einen Panel-PC auf einen Standfuss oder an einen von oben an den Panel-PC geführten Tragarm zu montieren. Zusätzlich kann ein für eine erste Nutzung bzw. Bedienung einer Industrieanlage aufgestellter Panel-PC auf einen Standfuss bei einer zweiten andersartigen Nutzung bzw. Bedienung der Industrieanlage mit veränderten Rahmenbedinungen flexibel auf ein oben an den Panel-PC adaptierten Tragarm mit Hilfe dieser dritten Flanschfläche einfach umgerüstet werden.

Weiterhin ist es vorteilhaft, dass an der dritten Flanschfläche eine Flanschplatte angeordnet ist, welche als Modulträger für Funktionsergänzungen des Bedienfeldes ausgestaltet ist. In diese Flanschplatte können beispielsweise eine USB-Schnittstelle oder ein Zugang für ein Programmiergerät angeordnet sein. Die Leitungen für die USB-Schnittstelle bzw. für den Anschluss des Programmiergerätes werden dann ebenfalls durch eine weitere Aussparung in der dritten Flanschfläche in das Innere des Gerätes geführt.

Es ist weiterhin vorteilhaft, wenn eine Kühlfläche zum Kühlen eines Bauteils eines Elektronik-Moduls an zumindest ein Rahmenelement angekoppelt ist. Da die Rahmenelemente bzw. der komplette Tragrahmen in der Regel aus einem metallischen Werkstoff gefertigt ist, kann die von Metall bekannte gute Wärmeleitfähigkeit dazu benutzt werden, die von Bauteilen entstehende Abwärme in den Tragrahmen zu führen und damit das Bauteil zu kühlen. Ist ein erfindungsgemäßer Tragrahmen als eine Aludruckgussrahmenplatte oder ein Alufrästeil ausgestaltet, so können auf dieser Platte kleine Säulen oder Metallklötze, welche ein fester Bestandteil der Platte sind angeordnet sein und diese Säulen oder Metallklötze kontaktieren dann auf einer Leiterplatte des Elektronik-Moduls angeordnete elektronische Bauelemente zur Abführung von der Wärme.

Bei der eingangs genannten Bedien- und Beobachtungsvorrichtung wird die Aufgabe dadurch gelöst, dass ein Teil zumindest eines ersten Rahmenelementes mit einer ersten Flanschfläche zum Anflanschen des ersten Rahmenelementes an einen Tragarm mit einer zweiten Flanschfläche ausgestaltet ist. Mit der in den Tragrahmen integrierten Flanschfläche kann der unwirtschaftliche Einbau einer Bedien- und Beobachtungsvorrichtung in einen Einbaukasten entfallen.

Auf vorteilhafte Weise bilden das Bedienfeld, die Seitenflächen und eine auf den Tragrahmen aufgesetzte Abdeckung, welche dichtend um die erste Flanschfläche angeordnet ist eine bauliche Einheit. Diese bauliche Einheit ist in ihrer Gesamtheit derart ausgestaltet, dass sie den rauen Industrieanforderungen von Bedien- und Beobachtungsvorrichtungen gerecht wird. Beispielsweise kann eine solche bauliche Einheit eine IP65 Schutzklasse erfüllen, d.h. die bauliche Einheit ist gegen Spritzwasser von allen Seiten geschützt. Darüber hinaus bildet die Abdeckung, beispielsweise als Aludruckgussgehäuse ausgeführt, eine formstabile Haube, welche passgenau in den Tragrahmen eingesetzt wird, und somit für eine Verteilung der an den Flanschflächen auftretenden Kräfte sorgt, welche durch das Eigengewicht eines beispielsweise eingebauten Panel-PC's entsteht. Bei einem derartigen Gehäusekonzept mit einer Abdeckung, ist beispielsweise im Falle eines Panel-PC's als Bedien- und Beobachtungsvorrichtung, dieser in einem Wartungs-oder Reparaturfalle jederzeit leicht zugänglich.

Weiterhin ist es vorteilhaft, wenn zwischen der ersten Flanschfläche und der zweiten Flanschfläche ein Verbindungsmittel angeordnet ist, welches mit Haltearmen zur Aufnahme von Zusatzgeräten, welche im Wesentlichen zu den Seitenflächen angeordnet sind, ausgestaltet ist. Durch die an dem Verbindungsmittel angeordneten Haltearmen entsteht ein flexibles Baukastensystem aus einem Grundgerät mit beliebigen Erweiterungen von Zusatzgeräten, welche beispielsweise rechts und links von dem Grundgerät angeordnet werden können. An diese Haltearme kann auch ein Tastaturträger montiert werden und dadurch wird die Möglichkeit einen Tastatur unterhalb der Bedienfläche anzuordnen, geschaffen.

Vorzugsweise sind derartige Bedien- und Beobachtungsvorrichtungen mit einem Bedienfeld aus einem Touch Screen ausgestaltet.

Eine weitere Aufgabe der Flansche ist neben der Positionierung der Teile zueinander häufig auch die Übertragung von Betriebskräften. Die Flanschfläche wird dabei vorzugsweise mit Stützrippen, Verstärkungselementen oder Stabilisatoren konstruktiv ausgestaltet.

Im Folgenden wird die Erfindung durch die in den Figuren dargestellten Ausführungsbeispiele näher beschrieben und erläutert. Es zeigen:
- FIG 1: einen Tragrahmen,
- FIG 2: eine Bedien- und Beobachtungsvorrichtung als Panel-PC mit Zusatzgeräten auf einem Tragarm und
- FIG 3: die Bedien- und Beobachtungsvorrichtung aus FIG 2 in einer Rückansicht.

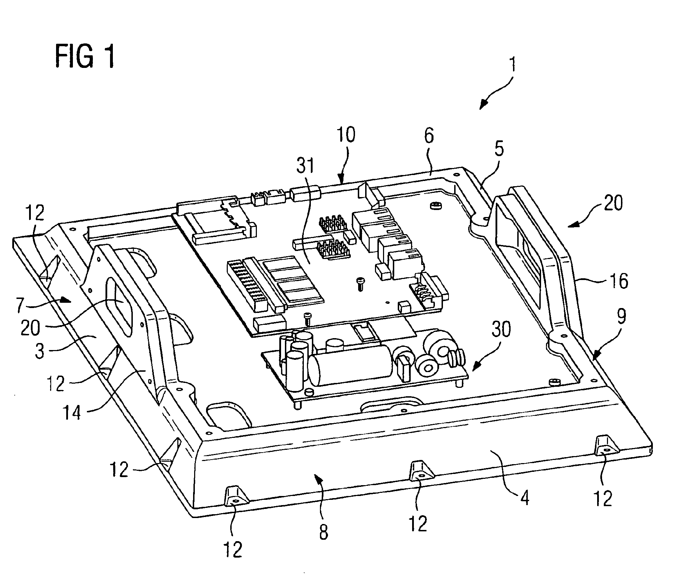

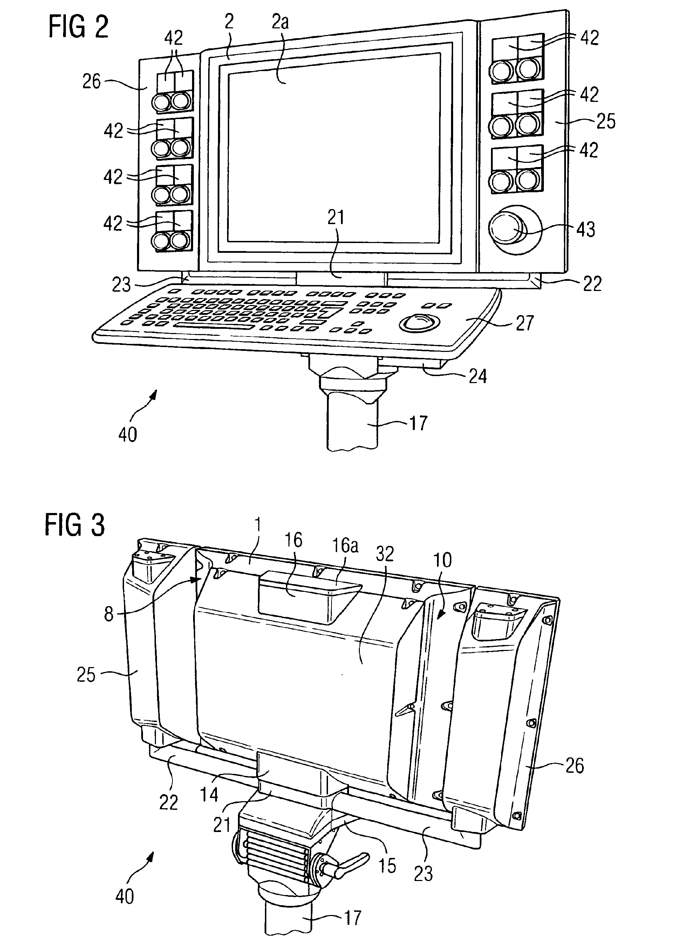

Gemäß FIG 1 ist ein Tragrahmen 1 zur Aufnahme eines Bedienfeldes 2 (siehe FIG 2) dargestellt, wobei der Tragrahmen ein erstes Rahmenelement 3, ein zweites Rahmenelement 4, ein drittes Rahmenelement 5 und ein viertes Rahmenelement 6 aufweist. Durch diese vier Rahmenelemente wird der rechteckförmige Tragrahmen 1 für das Bedienfeld 2 gebildet. Da dieser Tragrahmen 1 später ein Gehäuseteil bildet, sind die Seitenflächen der Rahmenelemente als eine erste Seitenfläche 7, eine zweite Seitenfläche 8, eine dritte Seitenfläche 9 und eine vierte Seitenfläche 10 ausgestaltet. An das erste Rahmenelement 3 ist in der Mitte des Rahmenelementes 3 symmetrisch zu seinen Enden eine erste Flanschfläche 14 angeordnet. Diese erste Flanschfläche 14 ist dazu ausgestaltet eine sichere Montageverbindung mit einer zweiten Flanschfläche 15 eines Tragarms 17 bereitzustellen. Da in FIG 1 nur die perspektivische, dreidimensionale Darstellung des Tragrahmens 1 abgebildet ist, wird für Bezugszeichen, welche nicht in der FIG 1 zu finden sind, auf die Figuren 2 und 3 verwiesen.

An dem dritten Rahmenelement 5, welches dem ersten Rahmenelement 3 gegenüberliegt, ist eine dritte Flanschfläche 16 angeordnet. Ein in den Tragrahmen 1 eingebauter Panel-PC kann somit entweder auf einem Tragarm 17, welcher als Standfuss ausgelegt ist, oder mit einem hängenden Tragarm welcher von oben auf das mittels des Tragrahmens 1 gebildeten Gerätes zukommt, adaptiert werden. Die erste Flanschfläche 14 und die zweite Flanschfläche 16 weisen jeweils eine Aussparung 20 auf. Diese Aussparung 20 dient der Zuführung von Signalleitungen zu einem Elektronik-Modul 31.

Um ein Bedienfeld innerhalb des Tragrahmens 1 zu montieren sind umlaufend in den Rahmenelementen jeweils drei Befestigungsmittel 12, welche als Bohrungen für Befestigungsschrauben ausgelegt sind, eingelassen.

Das Elektronik-Modul 31 ist innerhalb des Tragrahmens 1 auf einer Kühlfläche 30 angeordnet. Der Tragrahmen 1 ist dabei als eine Tragrahmen-Alu-Druckgussplatte ausgestaltet.

FIG 2 zeigt eine Bedien- und Beobachtungsvorrichtung 40, welche als ein Panel-PC mit Zusatzgeräten 25, 26, 24 ausgestattet ist. Der Panel-PC mit seinem Bedienfeld 2 hat eine Bedienfläche 2a, welche als ein Touch-Screen-Monitor ausgestaltet ist. In einer Vorderansicht auf den Panel-PC ist rechts von seiner Bedienfläche 2a ein erstes Zusatzgerät 25 über einen ersten Haltearm 22 angeordnet. Das erste Zusatzgerät 25 weist sechs Schaltelemente 42 auf. Über solche Schaltelemente 42 können industrielle Anlagen im Direkttastenbetrieb gesteuert werden. Unterhalb der Anordnung der Schaltelemente 42 des ersten Zusatzgerätes 25 ist ein Not-Aus-Taster 43 eingearbeitet. Der erste Haltearm 22 ist mit einem Verbindungsmittel 21 fest, beispielsweise durch eine Schweißverbindung, verbunden. Das Verbindungsmittel 21 bildet einen Adapter, welcher zwischen der aus FIG 1 bekannten ersten Flanschfläche 14 und einer nur auf FIG 3 sichtbaren zweiten Flanschfläche 15 montiert ist.

In der Vorderansicht auf den Panel-PC ist ausgehend von dem Verbindungsmittel 21 ein zweiter Haltearm 23 nach links geführt. An diesen zweiten Haltearm 23 ist ein zweites Zusatzgerät 26 mit acht weiteren Schaltelementen 42 angeordnet.

Mit einem nur andeutungsweise dargestellten dritten Haltearm 24 wird ein drittes Zusatzgerät 27, welches als eine Tastatur ausgestaltet ist, unterhalb der Bedienfläche 2a des Panel-PC's angeordnet. Der gesamte Panel-PC und somit die Bedien-und Beobachtungsvorrichtung 40 ist mittels der ersten Flanschfläche 14 des Tragrahmens 1 über das Verbindungsmittel 21 auf einem Tragarm 17 montiert, welcher als Standfuss ausgeführt ist.

Gemäß FIG 3 ist der aus FIG 2 bekannte Panel-PC als Bedien-und Beobachtungsvorrichtung 40 in einer perspektivischen Rückansicht abgebildet. Der Panel-PC ist über seine in den Tragrahmen 1 eingelassene erste Flanschfläche 14 mit dem Verbindungsmittel 21 über die zweite Flanschfläche 15 mit dem Tragarm 17 verbunden. Die Ausgestaltung des ersten und des zweiten Haltearmes 22, 23 ist in dieser rückwärtigen Ansicht gut erkennbar. An das im Wesentlichen an die Form der ersten Flanschfläche 14 angepasste Verbindungsmittel 21 sind der erste und der zweite Haltearm 22 und 23 angefügt. Über einen rechtwinkligen Knick in den Haltearmen 22, 23 sind das erste und das zweite Zusatzgerät 25, 26 über entsprechend kleiner ausgelegte Flanschflächen an die Haltearme 22, 23 montiert. Eine Abdeckung 32 bildet zusammen mit dem Bedienfeld 2 und den Seitenflächen 7, 8, 9, 10 eine bauliche Einheit für den als Grundgerät ausgestalteten Panel-PC. Die Abdeckung 32 ist dichtend in den Tragrahmen 1 und um die Flanschflächen 14 und 16 angeordnet. Auf die Flanschfläche 16 ist zur Abdeckung eine Flanschplatte 16a montiert. In dieser Flanschplatte 16a können optional Funktionsergänzungen für das Bedienfeld 2 bzw. für den gesamten Panel-PC eingebaut werden. Die Flanschplatte 16a dient somit als ein Modulträger.

## Patentansprüche

1. Tragrahmen (1) zur Aufnahme eines Bedienfeldes (2), umfassend den Tragrahmen (1) bildende Rahmenelemente (3, 4, 5, 6), welche als äußere einen Gehäuseteil bildende Seitenflächen (7, 8, 9, 10) ausgestaltet sind, und Befestigungsmittel (12) zur Befestigung des Bedienfeldes (2) im Wesentlichen innerhalb des Tragrahmens,
**dadurch gekennzeichnet, dass** ein Teil zumindest eines ersten Rahmenelementes (3) mit einer ersten Flanschfläche (14) zum Anflanschen des ersten Rahmenelementes (3) an einen Tragarm (17) mit einer zweiten Flanschfläche (15) ausgestaltet ist, wobei zwischen der ersten Flanschfläche (14) und der zweiten Flanschfläche (15) ein Verbindungsmittel (21) angeordnet ist, wobei das Verbindungsmittel (21) mit einem Haltearm (22, 23, 24) zur Aufnahme eines Zusatzgerätes (25, 26, 27), welches zu einer Seitenfläche (7, 8, 9, 10) angeordnet ist, ausgestaltet ist.

2. Tragrahmen (1) nach Anspruch 1,
wobei die erste Flanschfläche (14) im Wesentlichen senkrecht zu einer durch das Bedienfeld (2) gegebenen Bedienfläche (2a) angeordnet ist.

3. Tragrahmen (1) nach Anspruch 1 oder 2, wobei die erste Flanschfläche (14) eine Aussparung (20) zum Durchführen von Leitungen aufweist.

4. Tragrahmen (1) nach einem der Ansprüche 1 bis 3, wobei ein drittes Rahmenelement (5) eine dritte Flanschfläche (16) aufweist.

5. Tragrahmen (1) nach Anspruch 4, wobei an der dritten Flanschfläche (16) eine Flanschplatte (16a) angeordnet ist, welche als Modulträger für Funktionsergänzungen des Bedienfeldes (2) ausgestaltet ist.

6. Tragrahmen (1) nach einem der Ansprüche 1 bis 5, wobei eine Kühlfläche (30) zum Kühlen eines Bauteils eines Elektronik-Moduls (31) an zumindest ein Rahmenelement (3, 4, 5, 6) angekoppelt ist.

7. Bedien- und Beobachtungsvorrichtung (40) mit einem Tragrahmen (1) zur Aufnahme eines Bedienfeldes (2), umfassend den Tragrahmen (1) bildende Rahmenelemente (3, 4, 5, 6), welche als äußere, einen Gehäuseteil bildende Seitenflächen (7, 8, 9, 10) ausgestaltet sind, und Befestigungsmittel (12) zur Befestigung des Bedienfeldes (20) im Wesentlichen innerhalb des Tragrahmens (1),
**dadurch gekennzeichnet, dass** ein Teil zumindest eines ersten Rahmenelementes (3) mit einer ersten Flanschfläche (14) zum Anflanschen des ersten Rahmenelementes (3) an einen Tragarm (17) mit einer zweiten Flanschfläche (15) ausgestaltet ist, wobei zwischen der ersten Flanschfläche (14) und der zweiten Flanschfläche (15) ein Verbindungsmittel (21) angeordnet ist, welches mit Haltearmen (22, 23, 24) zur Aufnahme von Zusatzgeräten (25, 26, 27), welche im Wesentlichen zu den Seitenflächen (7, 8, 9, 10) angeordnet sind, ausgestaltet ist.

8. Bedien- und Beobachtungsvorrichtung (40) nach Anspruch 7, wobei das Bedienfeld (2), die Seitenflächen (7, 8, 9, 10) und eine auf den Tragrahmen (1) aufgesetzte Abdeckung (32), welche dichtend um die erste Flanschfläche (14) angeordnet ist eine bauliche Einheit bilden.

9. Bedien- und Beobachtungsvorrichtung (40) nach einem der Ansprüche 7 bis 8, wobei das Bedienfeld (2) als ein Touch-Screen ausgestaltet ist.

## Claims

1. Support frame (1) for supporting a control panel (2), comprising frame elements (3, 4, 5, 6) forming the support frame (1) which are embodied as external side surfaces (7, 8, 9, 10) forming a housing part, and securing means (12) for fixing the control panel (2) essentially inside the support frame,
**characterised in that** a part of at least one first frame element (3) is embodied with a first flange surface (14) for flange-mounting the first frame element (3) onto a support arm (17) having a second flange surface (15), wherein a connecting means (21) is arranged between the first flange surface (14) and the second flange surface (15), wherein the connecting means (21) is embodied with a retaining arm (22, 23, 24) for supporting an add-on device (25, 26, 27) which is arranged relative to a side surface (7, 8, 9, 10).

2. Support frame (1) according to claim 1,
wherein the first flange surface (14) is arranged essentially vertically with respect to an operator interface (2a) given by the control panel (2).

3. Support frame (1) according to claim 1 or 2, wherein the first flange surface (14) has a cutout (20) to allow lines to be routed through.

4. Support frame (1) according to one of claims 1 to 3, wherein a third frame element (5) has a third flange surface (16).

5. Support frame (1) according to claim 4, wherein a flange plate (16a) which is embodied as a module carrier for functional enhancements of the control panel (2) is arranged on the third flange surface (16).

6. Support frame (1) according to one of claims 1 to 5, wherein a cooling surface (30) for cooling a component of an electronics module (31) is coupled to at least one frame element (3, 4, 5, 6).

7. Operator control and monitoring device (40) having a support frame (1) for supporting a control panel (2), comprising frame elements (3, 4, 5, 6) forming the support frame (1) which are embodied as external side surfaces (7, 8, 9, 10) forming a housing part, and securing means (12) for fixing the control panel (20) essentially inside the support frame (1),
**characterised in that** a part of at least one first frame element (3) is embodied with a first flange surface (14) for flange-mounting the first frame element (3) onto a support arm (17) having a second flange surface (15), wherein a connecting means (21) is arranged between the first flange surface (14) and the second flange surface (15), said connecting means (21) being embodied with retaining arms (22, 23, 24) for supporting add-on devices (25, 26, 27) which are arranged essentially relative to the side surfaces (7, 8, 9, 10).

8. Operator control and monitoring device (40) according to claim 7, wherein the control panel (2), the side surfaces (7, 8, 9, 10) and a cover (32) placed onto the support frame (1) and arranged in a sealing manner around the first flange surface (14) form a structural unit.

9. Operator control and monitoring device (40) according to one of claims 7 to 8, wherein the control panel (2) is embodied as a touch screen.

## Revendications

1. Cadre ( 1 ) porteur de réception d'un panneau ( 2 ) de commande, comprenant des éléments ( 3, 4, 5, 6 ) de cadre formant le cadre ( 1 ) porteur et conformés en surfaces ( 7, 8, 9, 10 ) latérales extérieures formant une partie de boîtier, et des moyens ( 12 ) de fixation pour la fixation du panneau ( 2 ) de commande sensiblement à l'intérieur du cadre porteur,
**caractérisé en ce qu'**une partie d'au moins un premier élément ( 3 ) de cadre est conformé en ayant une première surface ( 14 ) de bride pour le bridage du premier élément ( 3 ) de cadre sur un bras ( 17 ) porteur avec une deuxième surface ( 15 ) de bride, un moyen ( 21 ) de liaison étant disposé entre la première surface ( 14 ) de bride et la première surface ( 15 ) de bride, le moyen ( 21 ) de liaison étant conformé en ayant un bras ( 22, 23, 24 ) de maintien pour la réception d'un appareil ( 25, 26, 27 ) supplémentaire, qui est disposé vers une surface ( 7, 8, 9, 10 ) latérale.

2. Cadre ( 1 ) porteur suivant la revendication 1,
dans lequel la première surface ( 14 ) de bride est sensiblement perpendiculaire à une surface ( 2a ) de service donné par le panneau ( 2 ) de commande.

3. Cadre ( 1 ) porteur suivant la revendication 1 ou 2,
dans lequel la première surface ( 14 ) de bride a un évidement ( 20 ) pour le passage de ligne.

4. Cadre ( 1 ) porteur suivant l'une des revendications 1 à 3,
dans lequel un troisième élément ( 5 ) de cadre a une troisième surface ( 16 ) de bride.

5. Cadre ( 1 ) porteur suivant la revendication 4,
dans lequel sur la troisième surface ( 16 ) de bride est disposée une plaque ( 16a ) de bride, qui est conformée en porte-module pour des compléments fonctionnels du panneau ( 2 ) de commande.

6. Cadre ( 1 ) porteur suivant la revendication 1 à 5,
dans lequel une surface ( 30 ) de refroidissement d'un composant d'un module ( 31 ) électronique est couplée à au moins un élément ( 3, 4, 5, 6 ) de cadre.

7. Dispositif ( 40 ) de commande et d'observation comprenant un cadre ( 1 ) porteur de réception d'un panneau ( 2 ) de commande, comprenant des éléments ( 3, 4, 5, 6 ) de cadre formant le cadre ( 1 ) porteur et conformés en surfaces ( 7, 8, 9, 10 ) latérales extérieures formant une partie de boîtier, et des moyens ( 12 ) de fixation pour la fixation du panneau ( 2 ) de commande sensiblement à l'intérieur du cadre ( 1 ) porteur,
**caractérisé en ce qu'**une partie au moins d'un premier élément ( 3 ) de cadre est conformée en ayant une première surface ( 14 ) de bride pour le bridage du premier élément ( 3 ) de cadre sur un bras ( 17 ) support avec une deuxième surface ( 15 ) de bride, un moyen ( 21 ) de liaison, qui est conformé en ayant des bras ( 22, 23, 24 ) de maintien pour la réception d'appareils ( 25, 26, 27 ) supplémentaires disposés sensiblement sur les surfaces ( 7, 8, 9, 10 ) latérales, étant disposé entre la première surface ( 14 ) de bride et la deuxième surface ( 15 ) de bride.

8. Dispositif ( 40 ) de commande et d'observation suivant la revendication 7, dans lequel le panneau ( 2 ) de commande, les surfaces ( 7, 8, 9, 10 ) latérales et un recouvrement ( 32 ) coiffant le cadre ( 1 ) porteur et disposé avec étanchéité autour de la première surface ( 14 ) de bride, forment une unité de construction.

9. Dispositif ( 40 ) de commande et d'observation suivant l'une des revendications 7 à 8, dans lequel le panneau ( 2 ) de commande est constitué sous la forme d'un écran tactile.
